# FASCICULE DE BREVET EUROPEEN

(11) **EP 3 203 364 B1**
(45) Date de publication et mention de la délivrance du brevet: **19.06.2019**
(21) Numéro de dépôt: 17152687.4
(22) Date de dépôt: 23.01.2017
(51) Int. Cl.: G06F 3/0488, A47F 11/10, H05B 37/02, G06F 3/0484, H05B 33/08, H04B 10/116, F21W 131/405

(54) **PROCEDE DE SCENARISATION A CONTENU MULTIMEDIA**
VERFAHREN ZUR STEUERUNG MIT MULTIMEDIA-INHALT
METHOD FOR SCRIPTING MULTIMEDIA CONTENT

(30) Priorité: 04.02.2016 FR 1650918
(43) Date de publication de la demande: 09.08.2017
(73) Titulaire: Lucibel SA, 92500 Rueil-Malmaison (FR)
(72) Inventeur: GAUDION, Joris, 92500 Rueil-Malmaison (FR); LEBRUN, Edouard, 75017 Paris (FR); BAUSSOU, Daniel, 75019 PARIS (FR)
(74) Mandataire: Martin, Marie-Aude

(56) Documents cités:
- EP-A1- 2 797 391
- EP-A2- 2 709 427
- US-A1- 2014 280 316
- US-A1- 2015 207 849
- US-A1- 2015 312 994
- Anonymous: "Andruino App - Home Automation", , 9 janvier 2016 (2016-01-09), XP055313121, Extrait de l'Internet: URL:http://web.archive.org/web/20160109165 459/http://andruino.it/ [extrait le 2016-10-21]

## Description

La présente invention concerne un procédé de scénarisation, en particulier avec des contenus multimédias, d'un espace physique destiné à être éclairé par un réseau de points d'éclairage, un terminal portatif propre à mettre en oeuvre ce procédé, un module logiciel incorporé dans le terminal portatif et un support de stockage lisible par le terminal portatif.

L'invention s'applique plus spécifiquement mais non exclusivement au domaine de la vente et de la commercialisation de produits dans les espaces de ventes et les infrastructures commerciales.

Dans les centres commerciaux, et plus généralement dans les espaces de ventes, les propriétaires de ces derniers souhaitent pouvoir créer des ambiances et des événements commerciaux différents en fonction des jours, des mois, des saisons, ceci afin de favoriser la commercialisation de leurs produits.

Ceci impose de modifier fréquemment l'organisation de l'espace de vente par exemple par un réaménagement de l'espace physique et par la création d'éclairages différents en fonction des rayonnages nouvellement créés à l'occasion de ces divers événements commerciaux.

Généralement, l'espace physique de vente est par exemple éclairé par un réseau de points d'éclairage pilotés par une unité de commande centralisée.

Afin d'offrir encore plus de services au consommateur, il est désormais connu de diffuser, via des tablettes portatives mises à disposition du consommateur, des contenus multimédias en rapport avec le produit ou le rayonnage intéressant le consommateur.

Pour divulguer de tels contenus, il est connu de transmettre les données selon la technologie Lifi (acronyme anglais pour « Light Fidelity ») ou selon le procédé VLC (acronyme anglais pour « Visible Light Communication » pour communication par la lumière visible) par lequel les données sont transmises depuis un des points d'éclairage vers un récepteur optique de la tablette portative par clignotement de la source lumineuse du point d'éclairage à une fréquence imperceptible par le consommateur.

En particulier, selon le point d'éclairage sous lequel le consommateur se trouve, des informations spécifiques lui sont envoyées (promotions, nouveautés, recettes, fiches techniques, etc.) en lien avec le rayonnage du magasin par exemple.

Or, l'ajout de cette technologie de transmission de données complexifie encore plus l'organisation de l'espace de vente et en particulier toute modification de cette organisation. En effet, par exemple, tout changement dans l'agencement des rayonnages implique une modification des contenus multimédias associés à la position des points d'éclairage de manière à ce que les contenus multimédias coïncident avec les rayonnages correspondants.

Cet environnement complexe exige alors une grande capacité d'adaptation, une grande flexibilité, une grande réactivité des équipes de vente qui ne sont pas toujours formées aux technologies informatiques. Les équipes de vente rencontrent des difficultés d'ergonomie ou de compréhension et doivent faire appel à des opérateurs extérieurs spécialisés en traitement du signal ou en informatique. Les surcoûts de déploiement d'une telle technologie sont alors tels qu'ils peuvent être dissuasifs, voire même conduire au renoncement du déploiement de la technologie.

Le document US 2014/0280316 A1 décrit un procédé de géolocalisation d'un dispositif mobile à partir de dispositifs d'éclairage. Ce document décrit une étape de pré-chargement d'une base de données en relation avec un dispositif d'éclairage.

Le document US 2015/312994 A1 décrit un système pour le contrôle d'éclairage à base de diodes électroluminescentes. Chaque lampe du système génère un identifiant unique à travers de la lumière visible. L'utilisateur peut ainsi placer un récepteur optique sous une lampe et la position du récepteur optique peut être indiquée sur le dispositif mobile. L'utilisateur peut ainsi passer d'un mode "configuration" (de l'éclairage) à un mode "éclairage" à travers une interface utilisateur. Dans le mode éclairage, il n'y a aucune association d'un contenu multimédia avec une position des lampes.

Le document US2015/207849 A1 décrit un appareil pour contrôler un ou plusieurs dispositifs contrôlables tels qu'une lampe, un dispositif de chauffage ou de refroidissement. Cet appareil fournit une interface utilisateur permettant le contrôle des dispositifs, notamment le contrôle d'une lampe donc d'un dispositif d'éclairage.

Le document EP 2 708 427 A2 décrit un système d'éclairage comprenant des appareils d'éclairage et un contrôleur pour contrôler une gradation et une température de couleur de l'appareil d'éclairage.

Le document EP 2 797 391 A1 décrit un programme et un procédé pour contrôler un terminal portatif d'informations.

L'invention a pour but de remédier à ces inconvénients et de proposer un procédé de scénarisation d'un espace physique, en particulier avec des contenus multimédias, en rapport avec un réseau d'éclairage, simple à mettre en oeuvre et ne nécessitant pas une formation initiale conséquente des intervenants traditionnels, tels que les équipes de vente.

A cet effet, l'invention a pour objet un procédé de scénarisation d'un espace physique destiné à être éclairé par un réseau de points d'éclairage selon la revendication 1, un terminal portatif pour la mise en oeuvre du procédé selon la revendication 14 et un module logiciel sur un support de données selon la revendication 15.

Au sens de la présente invention, on entend par « objet configurable », un objet dont les propriétés peuvent être définies par un utilisateur. Les propriétés peuvent notamment comprendre de façon non limitative une position de l'objet sur le support graphique, une ou plusieurs fonctions associées à l'objet, un attribut graphique (forme, couleur) de l'objet, etc.

Au sens de la présente invention, on entend par « contenu multimédia », notamment tout fichier numérique comprenant des données image, audio, vidéo, texte, une page Web. Le contenu multimédia peut correspondre à une publicité ou tout autre sujet d'informations.

De façon connue en soi, l'émission de la donnée d'identification est réalisée par modulation du flux lumineux (lumière) émis par le point d'éclairage. De préférence, la lumière est de la lumière visible mais la modulation lumineuse est à une fréquence telle que la modulation lumineuse est imperceptible pour un utilisateur.

L'invention propose ainsi une interface graphique ergonomique adaptée à la scénarisation avec des contenus multimédias d'un espace physique de vente. En effet, la génération automatique d'un objet graphique sur le terminal portatif représentatif du point d'éclairage permet à l'utilisateur d'obtenir une visualisation concrète du point d'éclairage. Par ailleurs, le fait que l'objet soit configurable permet à l'utilisateur de lui attribuer des propriétés telles que par exemple une position sur le support graphique mais également un ou des contenus multimédias.

Ceci permet à l'utilisateur d'organiser, dans le premier mode d'apprentissage, l'espace de vente, dans le cas par exemple d'un magasin, de façon très intuitive, sur l'espace virtuel du terminal portatif sans nécessiter une formation initiale longue et coûteuse. L'invention offre ainsi une facilité d'utilisation et une grande ergonomie.

Puis, dans le second mode d'exécution, l'utilisateur final, par exemple un consommateur de l'espace de vente, le contenu multimédia est automatiquement activé lors du passage de l'utilisateur sous le point d'éclairage correspondant.

Dans un mode de réalisation préféré de l'invention, le procédé comprend une étape de mémorisation par le terminal portatif, dans une table d'association, d'une correspondance entre l'objet graphique d'éclairage et la donnée d'identification du point d'éclairage.

L'association de l'objet graphique et du point d'éclairage correspondant permet de créer un lien continu, indépendamment de la position du terminal portatif dans l'espace physique réel.

Dans un autre mode de réalisation de l'invention, l'objet graphique d'éclairage est déplaçable et repositionnable sur le support graphique. L'utilisateur peut ainsi agencer l'espace virtuel au plus proche de l'espace réel physique en repositionnant les objets graphiques d'éclairage sur le support graphique pour les faire correspondre avec des positions réelles des points d'éclairage de l'espace physique. Cela permet à l'utilisateur de s'approprier l'espace physique et de le reproduire sur l'espace virtuel de son terminal portatif.

De préférence, le terminal comprenant un écran d'affichage tactile, le procédé comprend une étape de déplacement ou de repositionnement de l'objet graphique d'éclairage par une commande gestuelle prédéfinie. Ceci permet d'offrir une simplicité de fonctionnement et d'utilisation.

Dans un autre mode de réalisation de l'invention, le procédé comprend une étape de sélection à partir du terminal portatif d'un contenu multimédia dans une base de contenus multimédia et une étape d'affectation du contenu multimédia sélectionné à l'objet graphique d'éclairage. L'objet étant configurable, un ou plusieurs contenus multimédias peuvent lui être affectés. Ceci crée un lien direct entre le point d'éclairage physique représenté par son objet graphique virtuel et le ou les contenus multimédias que l'utilisateur souhaite lui attribuer. La scénarisation de l'espace de vente avec des contenus multimédias est alors très intuitive pour l'utilisateur.

De préférence, l'étape de sélection du contenu multimédia comprend une étape de connexion, via un réseau de communication, du terminal portatif à un serveur local ou à une plateforme d'un serveur distant comprenant une base de contenus multimédias.

De préférence, l'étape d'affectation comprend une étape de mémorisation par le terminal portatif, dans une table d'association, d'une correspondance entre l'objet graphique d'éclairage et une adresse d'un emplacement local ou distant du contenu multimédia.

Dans un autre mode de réalisation de l'invention, l'objet graphique d'éclairage est manipulable. L'objet graphique est ainsi configuré pour produire une réaction à une manipulation de l'objet par un utilisateur par exemple au moyen d'un dispositif de pointage (tel qu'une souris, un doigt, etc.), imitant une manipulation physique de l'objet. De préférence, cette manipulation produit également un retour visuel perceptible par l'utilisateur.

Dans un autre mode de réalisation de l'invention, le procédé comprend une étape d'affectation à l'objet graphique d'éclairage d'au moins une fonction de contrôle d'au moins un des points d'éclairage du réseau de manière à ce que l'objet graphique d'éclairage forme un élément graphique de contrôle du point d'éclairage. L'objet graphique peut donc être configuré en un élément graphique de contrôle du point d'éclairage. Il devient alors possible grâce à une action prédéfinie de l'utilisateur sur l'objet graphique d'obtenir un contrôle d'un ou plusieurs des points d'éclairage du réseau. Le contrôle peut être par exemple obtenu par manipulation de l'objet graphique.

Par exemple, la fonction de contrôle du point d'éclairage est choisie de façon non limitative parmi une fonction de commande de gradation lumineuse, une fonction de commande d'allumage du point d'éclairage, une fonction de commande d'extinction du point d'éclairage et une fonction de commande de modification de la température de couleur du point d'éclairage.

Dans un autre mode de réalisation de l'invention, le terminal comprenant un écran d'affichage tactile et l'objet graphique étant manipulable, le procédé comprend une étape de manipulation de l'objet graphique d'éclairage pour contrôler le point d'éclairage au moyen d'une commande gestuelle prédéfinie. Ce contrôle peut dans ce cas être réalisé de façon très intuitive grâce à une manipulation de l'objet virtuel.

Cette manipulation peut être réalisée par des commandes gestuelles basiques telles que par exemple un simple clic ou un double clic ou par des commandes gestuelles plus complexes telles que par exemple une manipulation de rotation de l'objet virtuel.

De préférence, le procédé comprend une étape d'émission, par le terminal portatif, d'un signal de contrôle du point d'éclairage en fonction d'informations tactiles acquises par le terminal portatif résultant de la commande gestuelle prédéfinie de l'étape de manipulation.

Dans un autre mode de réalisation de l'invention, le procédé comprend une étape de génération par le terminal portatif d'éléments graphiques secondaires représentatifs d'éléments de l'espace physique à scénariser, distincts des points d'éclairage, et une étape de positionnement des éléments graphiques secondaires sur le support graphique relativement à le ou les objets graphiques d'éclairage.

De préférence, l'étape de génération d'éléments graphiques secondaires est réalisée par sélection dans une bibliothèque prédéfinie de composants et de fonctions graphiques et par insertion desdits composants et fonctions graphiques sur le support graphique et/ou, le terminal comprenant un écran d'affichage tactile, l'étape de génération d'éléments graphiques secondaires est réalisée par traçage des éléments graphiques secondaires sur le support graphique par une commande gestuelle prédéfinie.

Dans un autre mode de réalisation de l'invention, l'espace physique comprenant au moins un appareil physique de type connecté distinct des points d'éclairage, le procédé comprenant une étape de détection par le terminal portatif de l'appareil connecté par communication sans fil et une étape de génération sur le support graphique d'un autre objet graphique configurable associé à l'appareil physique connecté, dit « objet graphique d'appareil connecté ».

Ceci permet d'offrir un plus grand champ d'applications en introduisant en plus dans la modélisation de l'espace physique d'autres appareils que les points d'éclairages et d'en tenir compte dans la scénarisation de l'espace physique. Les appareils physiques connectés comprennent des dispositifs à communication sans fil qui peuvent communiquer entre eux ou avec une unité centrale de commande. De tels appareils connectés permettent notamment la collecte de données statistiques du monde physique réel ou encore d'exercer une influence sur ce monde physique réel en étant piloté par communication sans fil. Par exemple, les appareils connectés comprennent des capteurs de mesures physiques (température, luminosité, pression, hygrométrie, etc.), des appareils d'éclairage dans le but de créer des ambiances lumineuses commandées, etc.

De préférence, le procédé comprend une étape de mappage d'objets graphiques afin de créer au moins un groupe d'objets graphiques en fonction d'un paramètre prédéfini par un utilisateur.

L'invention a encore pour objet un terminal portatif pour la mise en oeuvre du procédé selon l'invention, comprenant un écran d'affichage, un récepteur optique apte à recevoir des données d'identification émises par un flux lumineux d'un point d'éclairage du réseau, un module de stockage de données et un processeur, **caractérisé en ce que** le module de stockage comporte un module logiciel comprenant des instructions logicielles dont l'exécution par le processeur permet de mettre en oeuvre les étapes correspondantes d'un procédé selon l'invention.

L'invention a encore pour objet un module logiciel sur un support de données et chargeable dans un module de stockage de données d'un terminal portatif selon l'invention, **caractérisé en ce que** le module logiciel comporte des instructions logicielles pour la réalisation des étapes du procédé selon l'invention, lorsque les instructions logicielles sont exécutées sur ledit terminal portatif.

L'invention a enfin pour objet un support de stockage lisible par un terminal portatif selon l'invention, **caractérisé en ce que** le module logiciel selon l'invention est enregistré sur le support.

D'autres caractéristiques et avantages de l'invention apparaîtront à la lumière de la description qui suit, faite en référence aux dessins annexés dans lesquels :
- la figure 1 représente une installation pour la scénarisation avec des contenus multimédias d'un espace physique ;
- la figure 2 représente un réseau de points d'éclairage de l'installation selon la figure 1 ;
- la figure 3 représente une vue schématique d'un point d'éclairage du réseau représenté sur la figure 2 ;
- la figure 4 représente une vue schématique d'une unité de commande centralisée du réseau de points d'éclairage de la figure 2 ;
- la figure 5 représente une vue schématique d'un terminal portatif configuré pour exécuter les étapes d'un procédé selon l'invention de scénarisation avec contenus multimédias ;
- les figures 6 à 11 représentent des étapes du procédé de scénarisation avec contenus multimédias selon l'invention ;
- la figure 12 représente un exemple d'application du procédé de scénarisation selon l'invention.

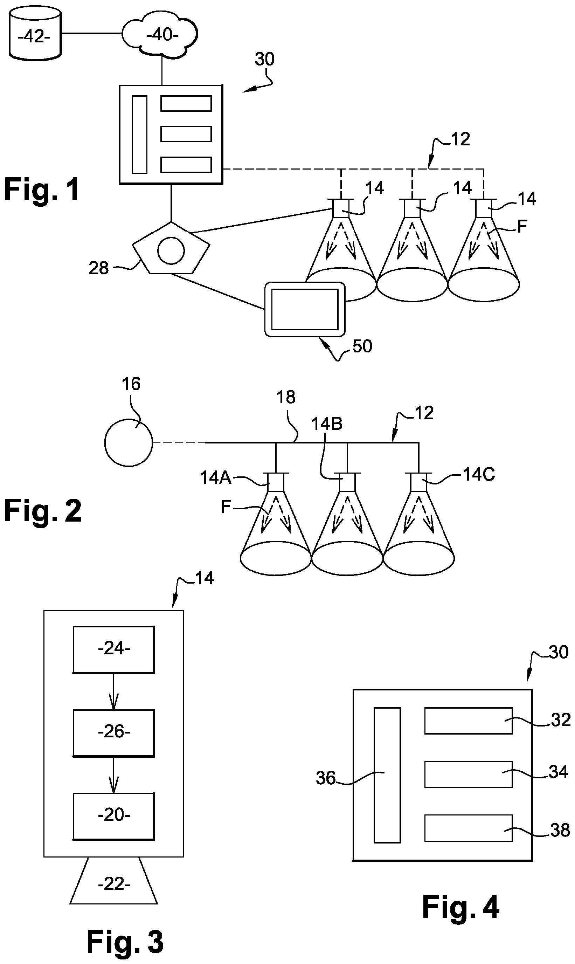

On a représenté de façon schématique sur **la** **figure 1** une installation pour la scénarisation, en particulier avec des contenus multimédias, d'un espace physique. Cette installation est désignée par la référence générale 10. Plus particulièrement, cette installation 10 est adaptée pour permettre la mise en oeuvre d'un procédé selon l'invention.

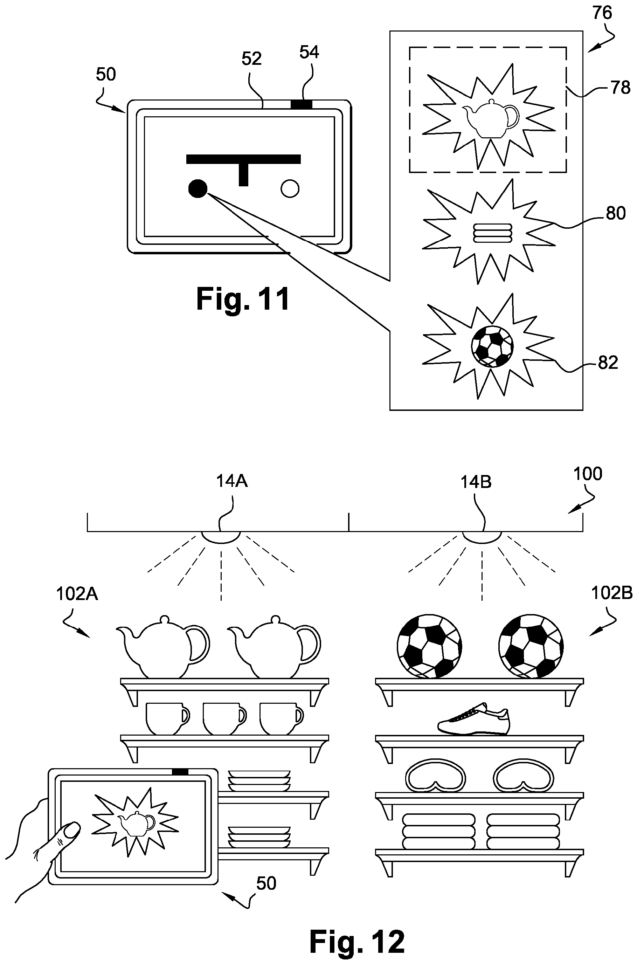

Dans l'exemple décrit, l'espace physique est un espace de vente par exemple un ensemble de rayonnages d'un magasin tel que celui illustré par **la** **figure 12**. Bien entendu, l'espace physique peut être un musée, une salle d'exposition ou tout autre espace adapté à une scénarisation avec des contenus multimédias en rapport à des points d'éclairage.

L'installation 10 comprend notamment un réseau 12 de points d'éclairage 14 de l'espace physique. Sur **la** **figure 1**, on a représenté trois points d'éclairage référencés 14A, 14B, 14C. Pour la suite de la description, les points d'éclairage sont désignés soit par la référence générale 14, soit de façon distinctive par leur propre référence 14A, 14B, 14C. Dans l'exemple décrit, les trois points d'éclairage 14A, 14B et 14C sont fonctionnellement identiques et ne se distinguent que par leur localisation dans l'espace physique. Toutefois, chacun des points 14A, 14B, 14C comprend dans l'exemple décrit un identifiant unique, tel qu'un numéro d'usine qui lui est propre.

**La** **figure 2** représente de façon schématique le réseau 12 de points d'éclairage 14. Sur cette figure, chaque point d'éclairage 14 émet un flux lumineux F pour éclairer une zone de l'espace physique. En outre, les points d'éclairage 14 sont raccordés électriquement de façon classique à une source d'alimentation électrique externe 16 par un ensemble de câbles électriques 18.

On a représenté en détail sur **la** **figure 3**, un des points d'éclairage 14 du réseau de points d'éclairage 12. Les autres points d'éclairage 14 sont sensiblement identiques à celui décrit ci-après.

Le point d'éclairage 14 comprend un module d'éclairage 20 qui comprend par exemple une source lumineuse 22. Ce module d'éclairage 20 est par ailleurs configuré pour émettre des données selon la technologie VLC (acronyme anglais pour « visible light communication »). Cette technologie consiste notamment à émettre des données sans fil en utilisant non pas des ondes électromagnétiques radio mais des clignotements lumineux qui peuvent être générés en pilotant les sources lumineuses 22 du réseau d'éclairage 12.

De préférence, la source lumineuse 22 comprend une pluralité de diodes électroluminescentes. En effet, les diodes électroluminescentes présentent, à la différence par exemple d'ampoules à incandescence traditionnelles, des temps de commutation plus faibles qui permettent de mettre en oeuvre des clignotements lumineux à des fréquences supérieures à 50 Hz, de sorte que ces clignotements ne sont ni gênants ni perceptibles du point de vue d'un utilisateur.

Dans l'exemple décrit, chacun des points d'éclairage 14A, 14B, 14C est configuré pour émettre une donnée d'identification respectivement notée VLC1, VLC2, VLC3 par des clignotements lumineux émis dans son flux. Cette donnée d'identification VLC1, VLC2 ou VLC3 correspond à un code lumineux distinct identifiable par un photorécepteur d'un équipement passant sous le flux lumineux du point d'éclairage correspondant. De façon connue en soi, chaque donnée d'identification correspond à un point d'éclairage et donc à une position dans l'espace physique. Le réseau d'éclairage 12 forme donc un quadrillage de l'espace physique défini par les différents points d'éclairage et offre donc une géolocalisation précise d'un équipement muni d'un tel photorécepteur.

En outre, le point d'éclairage 14 comprend un module 24 de communication adapté pour recevoir avec ou sans fil un signal de commande d'un ou des paramètres d'éclairage du point d'éclairage 14 via un réseau de télécommunication 28.

Ce réseau de télécommunication 28 est par exemple un réseau local, de préférence sans fil. Ce réseau de télécommunication 28 peut fonctionner de façon non limitative par exemple selon la technologie Wi-Fi, Wimax, Bluetooth ou encore Zigbee. Dans le mode de réalisation préféré de l'invention, le réseau 28 fonctionne selon la technologie Wi-Fi.

Par ailleurs, le point d'éclairage 14 comprend encore un module 26 de pilotage adapté pour modifier le ou les paramètres d'éclairage du module d'éclairage 20. Le module de pilotage 26 est ainsi configuré pour piloter le module d'éclairage 20. Le paramètre d'éclairage peut être de façon non limitative choisie parmi une intensité lumineuse, une couleur d'éclairage, une fréquence de commutation de la source lumineuse 22. Le module de pilotage 26 est ainsi apte à modifier l'intensité lumineuse et/ou la couleur d'éclairage, l'allumage et l'extinction de la source lumineuse 22. De façon connue en soi, le module de pilotage 26 est également plus communément désigné par sa terminologie anglo-saxonne « driver ».

De préférence, les modules 20, 22, 24, 26 sont intégrés dans le point d'éclairage 14 de manière à ne pas modifier son esthétisme. Bien entendu, d'autres configurations d'agencement sont envisageables sans pour autant sortir du cadre de l'invention.

De préférence, l'installation 10 comprend en outre une unité 30 de commande centralisée du réseau 12 de points d'éclairage 14. Cette unité 30 permet notamment par exemple de transmettre des signaux de commande aux différents points d'éclairage 14 du réseau d'éclairage 12 via le réseau de télécommunication 28.

A cet effet, les modules de communication 24 des points d'éclairage 12 sont adaptés pour échanger des données avec l'unité de commande centralisée 30 via le réseau de communication local 28. Ce réseau de local 28 est de préférence sans fil. Dans l'exemple de **la** **figure 1**, les points d'éclairage 14 comprennent des modules de communication 24 sans fil. Le réseau local 28 est dans l'exemple décrit un réseau de communication Wi-Fi et le module de communication 24 des points d'éclairage 14 est configuré pour émettre et recevoir des données selon la technologie Wi-Fi.

Toutefois, dans une variante de l'invention non illustrée, les points d'éclairage 14 peuvent communiquer avec l'unité de commande 30 par courant porteur via le réseau d'alimentation électrique 18 des points d'éclairage 14 du réseau d'éclairage 12.

Dans une autre variante, d'autres technologies de transmission de données peuvent être utilisées pour la transmission de données au travers du réseau local 28 telles que de façon non limitative les technologies Bluetooth, Zigbee, Wimax, etc.

A cet effet, dans l'exemple décrit et comme cela est illustré en détail sur **la** **figure 4**, l'unité de commande centralisée 30 comprend un module 32 de communication sans fil avec les points d'éclairage 14 via le réseau de communication 28.

L'unité de commande centralisée 30 comprend de préférence un processeur 34, notamment pour exécuter des instructions logicielles, qui est configuré pour commander le fonctionnement d'ensemble de l'unité de commande 30. L'unité de commande 30 comprend également dans l'exemple décrit un module d'accès 36 à un réseau externe 40 de télécommunication tel que le réseau Internet. L'unité de commande 30 comprend également dans cet exemple un module de stockage de données 38.

Le module d'accès 36 de l'unité centralisée de commande 30 forme dans l'exemple décrit un point d'accès de l'installation 10 au réseau Internet 40.

En particulier, sur **la** **figure 1**, on a représenté une base de données 42 de contenus multimédias. Cette base de données 42 est hébergée de préférence par une plateforme de services accessible via le réseau de télécommunications 40.

Dans cet exemple, le réseau local 28 comprend un routeur agencé pour acheminer des paquets de données entre le réseau Internet 40 et un équipement situé sur un même lien réseau que le routeur. L'équipement appartient dans ce cas au réseau local 28. Ce routeur correspond par exemple avantageusement à une passerelle d'accès permettant notamment à l'équipement du réseau local 28 d'accéder au réseau Internet 40. Le routeur appartient de préférence à l'unité de commande centralisée 30 et fait par exemple partie du module d'accès 36.

La base de données 42 est par exemple stockée sur un serveur distant fonctionnant selon le principe de « l'informatique en nuage » (de l'expression anglo-saxonne « cloud computing »). Ainsi, de façon connue en soi, dans le cas de « l'informatique en nuage », un utilisateur d'un service de stockage de données sur Internet se connecte à une plateforme de services dans laquelle est hébergée la base de données 42. Cette connexion est réalisée au moyen par exemple d'un navigateur web du module d'accès 36 de l'unité de commande 30.

Dans une variante non illustrée sur les figures, le module d'accès 36 peut être configuré pour récupérer des contenus multimédias qui sont destinés à être mémorisés dans le module de stockage 38 de l'unité centrale 30. Ainsi, dans cette variante, la base de données 42 est stockée dans le module de stockage 38 de l'unité de commande centralisée 30. Dans ce cas, l'unité de commande 30 joue le rôle d'un serveur local accessible dans l'installation 10 via le réseau local de communication 28.

De préférence, l'installation 10 comprend également un terminal portatif 50. Dans l'exemple décrit, ce terminal 50 est muni de moyens d'affichage graphique tel qu'un écran 52. Ce terminal 50 est par exemple une tablette portative.

Selon l'invention, le terminal portatif 50 est configurable dans des premier et second modes de fonctionnement respectivement d'apprentissage et d'exécution. La sélection de l'un des deux modes est réalisée au moyen d'une application logicielle installée dans le terminal portatif 50.

Le mode de fonctionnement apprentissage est un mode de fonctionnement actif du terminal portatif 50. Ce mode permet par exemple à l'utilisateur de paramétrer la scénarisation de l'espace physique. Dans ce mode, le terminal est programmé pour détecter des points d'éclairage et autoriser la configuration des objets graphiques virtuels associés aux points d'éclairage.

Le mode de fonctionnement d'exécution est un mode de fonctionnement passif du terminal portatif 50. Dans ce mode, le terminal est programmé pour détecter les points d'éclairage et pour automatiquement activer par exemple les contenus multimédia conformément au programme appris pendant le mode de fonctionnement apprentissage.

Ce terminal 50 comprend également un récepteur optique 54 apte à recevoir des données émises par un flux lumineux d'un des points d'éclairage 14 du réseau 12 de points d'éclairage. Par ailleurs, le terminal 50 comprend également un module de communication 56 avec l'unité de commande centralisée 30 via le réseau de communication 28. Dans l'exemple décrit, ce module de communication 56 est un module de communication sans fil. Par exemple, ce module de communication 56 est de type Wi-Fi.

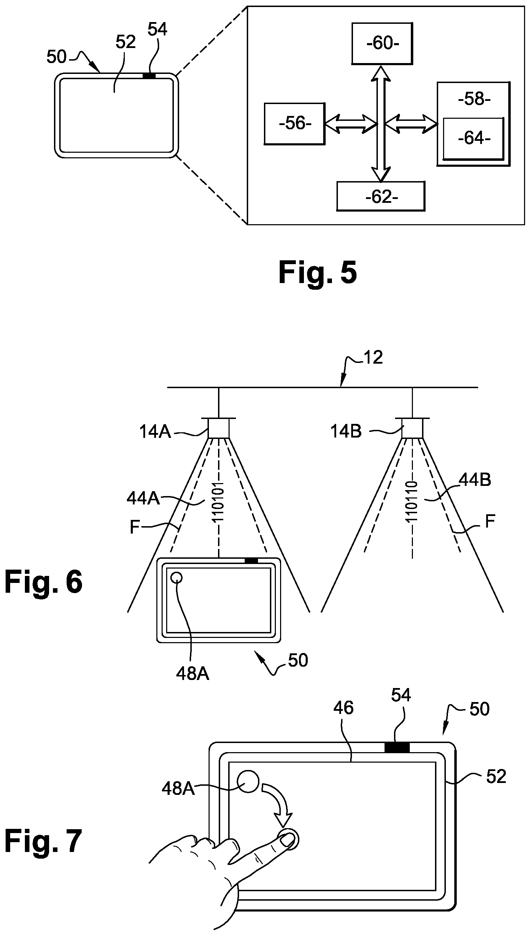

Ce terminal portatif 50 comprend, comme cela est représenté sur **la** **figure 5**, également un processeur 58 qui commande le fonctionnement d'ensemble du terminal 50. Le processeur 58 peut être constitué en pratique d'un ou plusieurs microprocesseurs programmés. Ce processeur 58 peut interagir avec le module de communication 56 qui effectue les sous-étapes de communication. Le processeur 50 peut également interagir avec des modules périphériques supplémentaires qui peuvent comprendre, de façon non limitative et optionnelle, des modules périphériques de sortie 60, des modules périphériques d'entrée 62 et un module de stockage 64.

Le module de stockage de données 64 peut comprendre, par exemple, une ou plusieurs mémoires d'accès direct (RAM), mémoire (ROM), un disque dur (HDD), ou n'importe quel autre support de stockage de données numérisées. Les modules périphériques supplémentaires ne sont pas limités à la liste précédente.

Les modules périphériques de sortie 60 peuvent comporter par exemple un module d'affichage de données sur l'écran 52. Ils peuvent également comprendre un module de sortie de données audio, par exemple via un haut-parleur ou un casque audio.

Les modules périphériques d'entrées 62 peuvent comprendre par exemple, de façon non limitative, un clavier, une souris, un appareil de navigation comme une ou plusieurs molettes de défilement cliquable, un pavé tactile, un écran tactile, un microphone audio ou tout autre dispositif permettant à un utilisateur d'interagir.

De préférence, l'écran 52 de la tablette 50 est un écran tactile dont la surface d'entrée est sensible au toucher ou à la pression.

Le processeur 56 est configuré pour exécuter usuellement des instructions logicielles également appelé logiciel ou module logiciel enregistré dans le module de stockage 64 et peut par exemple exécuter des instructions de modules logiciels stockés dans le module de stockage 64.

Dans le mode de réalisation préféré de l'invention, le module de stockage 64 mémorise un module logiciel qui comporte des instructions de programme ou instructions logicielles dont l'exécution par le processeur informatique 58 de la tablette 50 permet de mettre en oeuvre les étapes du procédé selon l'invention qui sera décrit ci-après plus en détail.

Le module logiciel peut être stocké dans, ou transmis par un support de stockage de données. Celui-ci peut être un support matériel de stockage, par exemple un CD-ROM, une disquette magnétique ou un disque dur, une carte mémoire, ou bien un support de transmission tel qu'un signal ou un réseau de télécommunication.

Par ailleurs, on notera qu'un tel module logiciel peut utiliser n'importe quel langage de programmation et comprendre des programmes sous forme de code source, code objet ou de code intermédiaire entre code source et code objet, tel que dans une forme partiellement compilée.

De façon optionnelle et bien que cela n'apparaissent pas sur les figures, l'installation 10 peut comprendre en outre au moins un appareil physique de type connecté, distinct des points d'éclairage 14. On entend par « appareil physique connecté », un dispositif du monde physique connecté à un réseau de communication sans fil permettant la récupération, le stockage, le transfert et le traitement des données s'y rattachant sans discontinuité entre les mondes physique et virtuel. Ce type d'appareil physique s'intègre plus largement dans le contexte de l'Internet des Objets (IdO) (également désigné par la terminologie anglo-saxonne « Internet of Things (IoT) »).

L'appareil physique connecté est par exemple un dispositif configuré pour communiquer sans fil avec une entité distante par exemple pour fournir des données de mesure de l'environnement physique de l'espace de vente, des données d'interaction de ces dispositifs avec les utilisateurs, ou encore pour exercer une influence sensorielle de l'espace physique par pilotage de l'appareil physique depuis une entité distante (qui peut être dans l'exemple décrit, l'unité centrale de commande 30 ou encore la tablette portative 50). L'influence sensorielle peut consister par exemple en une modification d'une ambiance sonore, olfactive ou encore visuelle (ambiance lumineuse variable en fonction des produits de l'espace de vente), etc.

L'appareil physique connecté peut comprendre un capteur, un actionneur, un appareil d'éclairage, un appareil sonore ou un interrupteur, etc.

De préférence, les points d'éclairage 14, qui sont également connectés au réseau local 28, forment également des dispositifs physiques « dits connectés » et sont aptes à fournir des données exploitables.

Toutes ces données générées par les différents dispositifs physiques dit connectés de l'installation 10 peuvent alors fournir des informations statistiques pertinentes concernant l'espace de vente.

De préférence, dans cet exemple, ces différents dispositifs physiques, conformément à la technologie de l'Internet des Objets, peuvent communiquer entre eux et/ou avec l'unité de commande centralisée 30 par exemple via le réseau local 28 selon le protocole Internet ou via d'autres réseaux de communication sans fil selon différentes technologies déjà précédemment citées
En se référant à présent **aux** **figures 6 à 12**, un procédé de scénarisation selon l'invention va maintenant être décrit plus en détail.

On a représenté sur **la** **figure 12**, l'espace physique 100 à scénariser. Cet espace physique 100 est composé de deux rayonnages 102A, 102B éclairés respectivement par les points d'éclairages 14A, 14B du réseau d'éclairage 12. Dans cet exemple, le rayonnage 102A comprend une présentation d'articles ménagers alors que le rayonnage 102B comprend une présentation d'articles de sport.

Initialement, les points d'éclairage 14A, 14B du réseau 12 sont mis sous tension et émettent tous les deux de la lumière. Bien entendu, l'allumage des points d'éclairage 14A, 14B pourrait être réalisé de façon successive afin d'éviter tout problème d'interférence entre les flux lumineux des deux points d'éclairage 14A, 14B.

Dans le mode de réalisation préféré de l'invention, les points d'éclairage 14A et 14B forment des équipements du réseau local 28. Dans cet exemple, lors de leur première mise sous tension, chacun des points d'éclairage récupère une adresse Protocole Internet.

Les modules de communication 24A, 24B « VLC » respectivement de chacun des points d'éclairage 14A, 14B provoquent le clignotement de la lumière émise et permettent de transmettre via ce clignotement une donnée d'identification 44A, 44B respectivement de chacun des points d'éclairage 14A, 14B.

Au cours d'une première étape, l'utilisateur déclenche l'exécution de l'application logicielle de scénarisation, désigné également par « module logiciel » depuis son terminal portatif 50. L'application logicielle est par exemple mémorisée dans le module de stockage 64 du terminal 50. L'utilisateur sélectionne dans un premier temps le mode de fonctionnement d'apprentissage.

Cette étape d'exécution provoque la génération par le terminal portatif 50 d'une interface graphique pour l'affichage sur l'écran 52 d'un support graphique 46 à au moins deux dimensions délimitant virtuellement l'espace physique à scénariser. Le support graphique 46 représente ainsi dans cet exemple un espace virtuel en deux dimensions, « image informatique » de l'espace physique. Bien entendu, le support graphique 46 peut être également un espace virtuel en trois dimensions.

Dans l'exemple illustré par exemple sur **la** **figure 7**, le support graphique 46 comprend un cadre de forme générale rectangulaire. Bien entendu, l'invention n'est pas limitée à cette forme particulière. Par exemple, la forme du support graphique peut être configurable par l'utilisateur via l'interface graphique utilisateur à disposition sur son terminal portatif 50.

Dès lors que le terminal portatif 50 est déplacé à l'intérieur du flux lumineux F du point d'éclairage 14A, le récepteur optique 54 du terminal 50 perçoit le flux lumineux F et le terminal 50 analyse ce flux F lors d'une étape de réception de la donnée d'identification du point d'éclairage 14A. Cette étape de réception consiste en ce que le récepteur optique 54 du terminal 50 intercepte le signal de clignotement lumineux du point d'éclairage 14A et en extrait une donnée d'identification 44A du point d'éclairage 14A.

Lors de la réception de la donnée d'identification 44A, le terminal 50 génère automatiquement un objet graphique virtuel configurable 48A représentatif du point d'éclairage 14A. Cet objet graphique 48A a dans cet exemple une forme générale circulaire comme cela est illustré sur **la** **figure 6** mais peut bien entendu présenter toute autre forme géométrique ou non géométrique. En particulier, de préférence, la forme ou la couleur, et plus généralement l'aspect de l'objet graphique 48A peut être configurable par l'utilisateur grâce à des moyens d'interfaçage graphique à disposition sur le terminal portatif 50. Par la suite, l'objet graphique représentatif du point d'éclairage est désigné par « objet graphique d'éclairage ».

Conformément à l'invention, l'objet graphique d'éclairage 48A, 48B est dit configurable. Au sens de la présente invention, on entend par « configurable » le fait que des propriétés de l'objet graphique peuvent être définies par l'utilisateur. Ces propriétés peuvent consister de façon non limitative en une position, en une ou plusieurs fonctions, en un ou plusieurs contenus et/ou en des paramètres qui peuvent être associés, mappés, liés et/ou affectés par l'utilisateur à l'objet graphique d'éclairage. L'objet graphique d'éclairage présente de ce fait des propriétés interactives.

Par exemple, l'objet graphique d'éclairage 48A est déplaçable et repositionnable sur le support graphique 46 (**figure 7**). De préférence, l'écran 52 étant tactile, cet objet graphique 48A est déplaçable et repositionnable par une commande gestuelle prédéfinie comme cela est illustré sur **la** **figure 7**. Dans l'exemple décrit, la commande gestuelle prédéfinie pour déplacer et/ou repositionner l'objet graphique est de type « glisser-relâcher », plus communément connue par la terminologie anglo-saxonne « drag-and-drop ».

Le procédé comprend de préférence une étape de mémorisation par le terminal portatif 50 dans une table d'association TA d'une correspondance entre l'objet graphique d'éclairage 48A et la donnée d'identification VLC1 du point d'éclairage 14A. Par exemple, la table d'association TA est mémorisée dans le module de stockage 64 du terminal 50. Toutefois, dans une variante, la table d'association TA peut être mémorisée dans le module de stockage de l'unité centrale 30 ou sur un serveur distant.

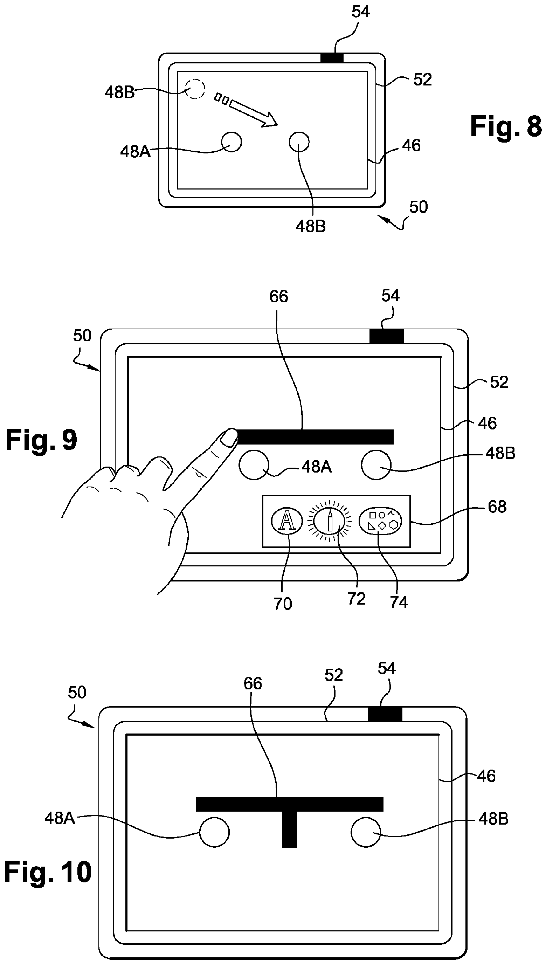

Ensuite, l'utilisateur passe sous le flux lumineux F du point d'éclairage 14B ce qui génère automatiquement l'objet graphique d'éclairage 48B correspondant à ce point d'éclairage 14B (**figure 8**). La correspondance de la donnée d'identification 44B avec l'objet graphique d'éclairage 48B est dans cet exemple également mémorisée dans la table d'association TA, elle-même mise à jour dans le module de stockage 64.

L'invention fournit donc grâce au support graphique virtuel une représentation concrète des points d'éclairage 14A, 14B via leurs objets graphiques virtuels 48A, 48B correspondants et ce sans nécessiter pour l'utilisateur de procéder à une opération complexe.

De façon optionnelle et comme ceci est illustré sur **les** **figures 9 et 10**, le terminal portatif 50, peut selon une instruction donnée par l'utilisateur, exécuter une étape de génération d'éléments graphiques secondaires 66 représentatifs d'éléments de l'espace physique à scénariser qui sont distincts des points d'éclairage 14A, 14B. Par exemple, comme cela est illustré sur **la** **figure 9**, le terminal portatif 50 peut exécuter une instruction d'affichage d'une boîte à outils de dessins 68 comportant différentes icônes représentatives des fonctions d'écriture 70, de dessin 72, ou de sélection 74 d'éléments graphiques secondaires 66 dans une base prédéfinie d'éléments de formes générales prédéfinies.

Dans le mode de réalisation préféré de l'invention, l'écran 52 étant tactile, l'utilisateur trace les éléments graphiques secondaires 66 avec une commande gestuelle prédéfinie pour réaliser leur génération sur le support graphique 46. Cette commande gestuelle est, dans l'exemple décrit, de type « glisser-relâcher ». Dans l'exemple illustré sur **la** **figure 6**, ces éléments graphiques 66 représentent virtuellement les rayonnages 102A, 102B. Dans cet exemple, l'utilisateur peut définir lui-même les formes des éléments graphiques secondaires 66 pour représenter au mieux l'espace physique.

Finalement, l'utilisateur obtient un support graphique 46, illustré sur **la** **figure 10**, comprenant une représentation schématique des rayonnages 102A, 102B par les éléments graphiques 66 ainsi que les deux objets graphiques générés 48A, 48B qu'il a pu librement positionner relativement aux éléments secondaires 66 sur le support graphique 46.

Une fois ces étapes réalisées, l'utilisateur procède à l'affectation de contenus multimédias aux deux objets graphiques d'éclairage 48A, 48B. Cette étape d'affectation consiste à « mapper » l'objet graphique d'éclairage 48A, 48B à un contenu multimédia de la base de contenus multimédias 42, c'est-à-dire à mettre en correspondance un objet graphique et un contenu multimédia.

Cette étape d'affectation peut bien entendu être réalisée à tout moment dès lors que l'objet graphique d'éclairage 48A correspondant a été généré et donc précédemment à l'étape de génération d'éléments graphiques secondaires.

De préférence, le procédé comprend, avant l'étape d'affectation du contenu, une étape de sélection à partir du terminal portatif 50 de ce contenu multimédia dans la base de contenus multimédias 42.

Par exemple, l'étape de sélection du contenu multimédia comprend une étape de connexion, via un réseau de communication, du terminal portatif à un serveur local ou à une plateforme d'un serveur distant comprenant la base de contenus multimédias 42.

De préférence, l'étape d'affectation comprend une étape de mémorisation dans une table d'association TB d'une correspondance entre l'objet graphique d'éclairage et une adresse d'un emplacement local ou distant du contenu multimédia. Dans une variante non représentée, la table d'association TB peut être incluse dans la table d'association TA.

Pour configurer l'objet graphique d'éclairage 48A, conformément à **la** **figure 11**, l'objet graphique 48A est par exemple activé dans un état configurable. Cette activation est réalisée par exemple par une commande gestuelle prédéfinie, par exemple une « tape » isolée. Dans une variante, l'objet graphique d'éclairage 48A peut être également activé par déplacement du terminal 50 sous le flux lumineux du point d'éclairage 14A correspondant. Ainsi, la mémorisation de l'association du point d'éclairage 14A et de son objet graphique correspondant 44A dans la table d'association TA permet une reconnaissance du point d'éclairage 14A associé à l'objet graphique 44A lorsque le terminal portatif 50 est sous le flux lumineux et intercepte la donnée d'identification du point d'éclairage 14. Le passage de l'objet graphique dans son état configurable peut être observé par une modification de l'aspect visuel de l'objet graphique 44A, par exemple par un changement de couleur de l'objet ou encore un changement de forme.

Dans cet état configurable, l'utilisateur peut notamment par exemple exécuter les étapes de sélection d'un contenu multimédia dans la base de contenus multimédias et d'affectation du contenu multimédia sélectionné à l'objet graphique d'éclairage.

Cette action produit l'affichage d'une liste de contenus multimédias provenant de la base de contenus multimédia. Cette base génère un ensemble de contenus multimédia représentés dans la fenêtre 76 de **la** **figure 11**. Dans l'exemple illustré, la fenêtre 76 comprend trois contenus multimédias différents 78, 80 et 82.

L'utilisateur sélectionne alors un des contenus et assure son affectation à l'objet graphique 48A. La table d'association TB peut ensuite être transmise à l'unité de commande centralisée 30 par transmission de données via le réseau de communication 28.

Au sens de la présente invention, on entend par « contenu multimédia », notamment tout fichier numérique comprenant des données image, audio, vidéo, texte, une page Web. Le contenu multimédia peut correspondre à une publicité ou tout autre sujet d'informations.

De préférence, l'objet graphique 48A est manipulable. L'objet graphique est ainsi configuré pour produire une réaction à une manipulation de l'objet par un utilisateur au moyen d'un dispositif de pointage (tel qu'une souris, un doigt, etc.), imitant une manipulation physique de l'objet. De préférence, cette manipulation produit également un retour visuel perceptible par l'utilisateur.

En outre, de préférence, le procédé comprend encore une étape d'affectation à l'objet graphique d'au moins une fonction de contrôle d'au moins un des points d'éclairage du réseau.

Dans le mode de réalisation préféré de l'invention, la fonction de contrôle du point d'éclairage est choisie parmi une fonction de commande de gradation lumineuse, une fonction de commande d'allumage du point d'éclairage, une fonction de commande d'extinction du point d'éclairage et une fonction de commande de modification de la température de couleur du point d'éclairage.

Par ailleurs, le procédé comprend une étape de manipulation du point d'éclairage 14 pour contrôler le point d'éclairage 14 au moyen d'une commande gestuelle prédéfinie.

La commande gestuelle prédéfinie est par exemple du type « geste de tape ». Dans ce cas, c'est le nombre de tapes et la durée de chaque tape qui définit la commande gestuelle. En variante, la commande gestuelle peut comprendre encore un nombre prédéfini de tapes ou de façon plus complexe peut correspondre à une action de rotation pour simuler une molette de réglage ou des commandes gestuelles encore plus complexes et variées.

De préférence, dans ce cas, le procédé comprend une étape d'émission, par le terminal portatif 50, d'un signal de contrôle du point d'éclairage 14 en fonction d'informations tactiles acquises par le terminal portatif 50 résultant de la commande gestuelle prédéfinie de l'étape de manipulation. Ce signal de contrôle est par exemple transmis via le réseau de communication 28 et peut par exemple transiter par l'unité de commande 30.

Lorsque l'installation 10 comprend en outre des appareils physiques de connectés, le procédé peut comprendre une étape de détection par le terminal portatif 50 de l'appareil physique connecté par communication sans fil et une étape de génération sur le support graphique 46 d'un autre objet graphique configurable associé à l'appareil physique connecté, dit « objet graphique d'appareil connecté ». La communication sans fil peut être réalisée par des technologies de communication diverses telles que la technologie Wi-Fi, Zigbee, Bluetooth, etc.

Dans ce cas, et afin de permettre un traitement de données ciblé, il est possible par exemple de « mapper » une pluralité d'objets graphiques d'éclairage et/ou d'appareils physiques connectés pour former un ou plusieurs groupes en fonction d'un paramètre prédéfini d'un utilisateur. Au sens de la présente invention, le « mappage » consiste à réaliser des mises en relation des objets graphiques entre eux. Un même objet graphique peut appartenir à plusieurs groupes. Le paramètre prédéfini par l'utilisateur peut par exemple être lié à une thématique de vente pour permettre l'obtention d'informations statistiques dans le contexte par exemple d'une organisation de l'espace de vente pour réaliser une optimisation des ventes.

**La** **figure 12** illustre une application du procédé de l'invention. La tablette portative est configurée dans un mode de fonctionnement d'exécution, dit également « applicatif » et non plus apprentissage comme cela a été décrit ci-dessus. Le mode de fonctionnement d'exécution est notamment destiné au consommateur de l'espace de vente par exemple ou à un utilisateur final.

Le consommateur se déplace dans les rayonnages de l'espace physique de vente. La tablette est alors géolocalisée relativement aux points d'éclairage qui émettent des données d'identification par communication VLC. Lorsqu'il se déplace sous le flux lumineux du luminaire 14A, la tablette portative 50 affiche le contenu multimédia 78 « promotion sur les théières » grâce à la relation existante entre la donnée d'identification 44A et le contenu multimédia 78. Cette relation a été préalablement établie en mode apprentissage par création de la table d'association TB « donnée d'identification - contenu multimédia » mémorisée dans le module de stockage 64 de la tablette portative 50 ou dans le module de stockage 38 de l'unité centrale de commande 30 et accessible via le réseau local 28.

Dans l'exemple décrit, on notera que l'affichage du contenu multimédia sur la tablette 50 génère une donnée statistique qui peut être mémorisée dans la tablette 50 ou l'unité de commande 30 à des fins de traitement et d'analyse. De telles données statistiques peuvent permettre d'optimiser encore l'organisation de l'espace de vente.

Les modes de réalisation de l'invention présentés ci-dessus sont décrits uniquement à titre d'exemple.

L'homme de l'art peut y effectuer des modifications et des combinaisons de modes particuliers de réalisation sans quitter le champ d'application de la présente invention.

En particulier, les caractéristiques d'un ou de plusieurs des modes de réalisation décrits ci-dessus peuvent être choisis et combinés pour créer des variantes de réalisation comprenant des sous-ensembles de caractéristiques qui ne sont pas explicitement décrits ci-dessus.

En outre, les caractéristiques d'un ou de plusieurs des modes de réalisation décrits ci-dessus peuvent être sélectionnés et combinées pour créer des variantes de réalisation comprenant des combinaisons de caractéristiques qui ne sont pas explicitement décrites ci-dessus.

L'homme de l'art, après examen de l'invention dans son ensemble, verrait à l'évidence les caractéristiques adaptées à de telles combinaisons et sous-combinaisons.

L'objet de l'invention doit également être entendu comme couvrant tous les changements appropriés en matière de technologie, en particulier les évolutions des protocoles informatiques mentionnés ci-avant.

## Revendications

1. Procédé de scénarisation d'un espace physique destiné à être éclairé par un réseau (12) de points d'éclairage (14 ; 14A, 14B, 14C), dans lequel chaque point d'éclairage (14 ; 14A, 14B, 14C) est configuré pour émettre une donnée d'identification (44A, 44B) via la lumière qu'il émet, le procédé étant destiné à être mis en oeuvre par un terminal portatif (50) muni d'un écran d'affichage graphique (52) et configurable alternativement dans des premier et second modes de fonctionnement d'apprentissage et d'exécution, le procédé comprenant les étapes suivantes de :
- génération par le terminal portatif (50) d'une interface graphique pour l'affichage sur l'écran (52) d'un support graphique (46) à au moins deux dimensions délimitant virtuellement l'espace physique,
- réception par le terminal portatif (50) de la donnée d'identification (44A, 44B) d'un des points d'éclairage (14 ; 14A, 14B, 14C) lorsque le terminal (50) est déplacé à l'intérieur de la lumière de ce point d'éclairage (14 ; 14A, 14B, 14C),
et dans lequel, dans le premier mode de fonctionnement d'apprentissage du terminal portatif, le procédé comprend les étapes suivantes de :
- génération par le terminal portatif (50), sur le support graphique (46) et à la réception de la donnée d'identification (44A, 44B), d'un objet graphique virtuel configurable (48 ; 48A, 48B), associé au point d'éclairage (14 ; 14A, 14B, 14C), dit «objet graphique d'éclairage »,
- activation de l'objet graphique virtuel (48 ; 48A, 48B) dans un état configurable par déplacement du terminal (50) sous le flux lumineux du point d'éclairage (14A) correspondant,
- sélection à partir du terminal portatif (50) d'un contenu multimédia dans une base (42) de contenus multimédia et affectation du contenu multimédia sélectionné à l'objet graphique d'éclairage (48 ; 48A, 48B) généré activé dans son état configurable,
et dans le quel, dans le second mode de fonctionnement d'exécution, le procédé comprend une étape d'activation du contenu multimédia par le terminal portatif affecté à l'objet graphique lorsque le terminal est déplacé à l'intérieur de la lumière du point d'éclairage correspondant à l'objet graphique.

2. Procédé selon la revendication précédente, comprenant une étape de mémorisation par le terminal portatif (50), dans une table d'association, d'une correspondance entre l'objet graphique d'éclairage (48 ; 48A, 48B) et la donnée d'identification du point d'éclairage (14 ; 14A, 14B, 14C).

3. Procédé selon l'une ou l'autre des revendications précédentes, dans lequel l'objet graphique d'éclairage (48 ; 48A, 48B) est déplaçable et repositionnable sur le support graphique (46).

4. Procédé selon la revendication précédente, le terminal portatif (50) comprenant un écran d'affichage tactile (52), le procédé comprend une étape de déplacement ou de repositionnement de l'objet graphique d'éclairage (48 ; 48A, 48B) par une commande gestuelle prédéfinie.

5. Procédé selon l'une quelconque des revendications précédentes, dans lequel l'étape de sélection du contenu multimédia comprend une étape de connexion, via un réseau de communication (28), du terminal portatif (50) à un serveur local ou à une plateforme d'un serveur distant comprenant la base (42) de contenus multimédias.

6. Procédé selon l'une quelconque des revendications précédentes, dans lequel l'étape d'affectation comprend une étape de mémorisation par le terminal portatif (50), dans une table d'association, d'une correspondance entre l'objet graphique d'éclairage (48 ; 48A, 48B) et une adresse d'un emplacement local ou distant du contenu multimédia.

7. Procédé selon l'une quelconque des revendications précédentes, dans lequel l'objet graphique d'éclairage (48 ; 48A, 48B) est manipulable.

8. Procédé selon l'une quelconque des revendications précédentes, dans lequel le procédé comprend une étape d'affectation à l'objet graphique d'éclairage (48 ; 48A, 48B) d'au moins une fonction de contrôle d'au moins un des points d'éclairage (14 ; 14A, 14B, 14C) du réseau (12) de manière à ce que l'objet graphique d'éclairage (48 ; 48A, 48B) forme un élément graphique de contrôle du point d'éclairage (14 ; 14A, 14B, 14C).

9. Procédé selon la revendication précédente, dans lequel le terminal portatif (50) comprenant un écran d'affichage tactile (52) et l'objet graphique d'éclairage (48 ; 48A, 48B) étant manipulable, le procédé comprend une étape de manipulation de l'objet graphique d'éclairage (48 ; 48A, 48B) pour contrôler le point d'éclairage (14 ; 14A, 14B, 14C) au moyen d'une commande gestuelle prédéfinie.

10. Procédé selon la revendication précédente, dans lequel le procédé comprend une étape d'émission, par le terminal portatif (50), d'un signal de contrôle du point d'éclairage (14 ; 14A, 14B, 14C) en fonction d'informations tactiles acquises par le terminal portatif (50) résultant de la commande gestuelle prédéfinie de l'étape de manipulation.

11. Procédé selon l'une quelconque des revendications 8 à 10, dans lequel la fonction de contrôle du point d'éclairage (14 ; 14A, 14B, 14C) est choisie parmi une fonction de commande de gradation lumineuse, une fonction de commande d'allumage du point d'éclairage (14 ; 14A, 14B, 14C), une fonction de commande d'extinction du point d'éclairage (14 ; 14A, 14B, 14C) et une fonction de commande de modification de la température de couleur du point d'éclairage (14 ; 14A, 14B, 14C).

12. Procédé selon l'une quelconque des revendications précédentes, dans lequel, l'espace physique comprenant au moins un appareil physique de type connecté distinct des points d'éclairage (14 ; 14A, 14B, 14C), le procédé comprenant une étape de détection par le terminal portatif (50) de l'appareil physique connecté par communication sans fil et une étape de génération sur le support graphique (46) d'un autre objet graphique configurable associé à l'appareil physique connecté, dit « objet graphique d'appareil connecté ».

13. Procédé selon l'une quelconque des revendications précédentes, comprenant une étape de mappage d'objets graphiques (48 ; 48A, 48B) pour créer un groupe d'objets graphiques (48 ; 48A, 48B) en fonction d'un paramètre prédéfini par un utilisateur.

14. Terminal portatif (50) pour la mise en oeuvre du procédé selon l'une quelconque des revendications précédentes, comprenant un écran d'affichage (52), un récepteur optique (54) apte à recevoir des données d'identification émises par un flux lumineux d'un point d'éclairage (14 ; 14A, 14B, 14C) du réseau (12), un module de stockage de données (64) et un processeur (58), **caractérisé en ce que** le module de stockage (64) comporte un module logiciel comprenant des instructions logicielles dont l'exécution par le processeur (58) permet de mettre en oeuvre les étapes correspondantes d'un procédé selon l'une quelconque des revendications précédentes.

15. Module logiciel sur un support de données et chargeable dans un module (64) de stockage de données d'un terminal portatif (50) selon la revendication précédente, **caractérisé en ce que** le module logiciel comporte des instructions logicielles pour la réalisation des étapes du procédé selon l'une quelconque des revendications 1 à 13, lorsque les instructions logicielles sont exécutées sur ledit terminal portatif (50).

## Patentansprüche

1. Scripting Verfahren des physikalischen Raumes sollte aus einem Array beleuchtet werden (12) von Lichtflecken (14; 14A, 14B, 14C) aufweisen , wobei jeder Beleuchtungspunkt (14; 14A, 14B, 14C) konfiguriert ist, eine Identifikation zu übertragen , Datenelement (44A, 44B) über das Licht , das sie aussendet, bestimmt wobei das Verfahren mit einem graphischen Anzeigebildschirm und (52), die abwechselnd ausgerüstet mit einem tragbaren Endgerät (50) umgesetzt wird in ersten und zweiten Betriebsmodi konfiguriert werden kann , für das Lernen und Ausführen, wobei das Verfahren der Schritte:
- Erzeugung durch das tragbare Endgerät in (50) eine graphische Benutzeroberfläche für die Anzeige auf dem Bildschirm (52) einen graphischen (46), Träger wenigstens zwei Dimensionen mit einem virtuellen physikalischen definierte Platz,
- Empfangen von von dem tragbaren Endgerät (50) des Elements der Identifizierungsdaten (44A, 44B) von einem der Lichtpunkte (14; 14A, 14B, 14C), wenn die Klemme (50) in dem Licht der Beleuchtungs bewegt wird, Punkt (14; 14A, 14B, 14C), **dadurch gekennzeichnet, daß** im ersten Lembetriebsmodus des tragbaren Endgerätes, wobei das Verfahren die folgenden Schritte umfassen:
- Erzeugung durch das tragbare Endgerät (50), auf der Tragplattform und (46) auf den Empfang der Artikel von Identifikationsdaten (44A, 44B), eines konfigurierbaren virtuellen graphischen Objekts (48; 48A, 48B), mit dem Beleuchtungspunkt zugeordnet (14; 14A, 14B, 14C), wobei die "Beleuchtungs graphisches Objekt ",
- Auswählen von dem tragbaren Endgerät in (50) einen Multimedia-Inhalt in einer Datenbank (42) von Multimedia-Inhalten, und einem Schritt, um den ausgewählten Multimediainhaltes an die graphischen Objektbeleuchtung Zuweisen (48; 48A, 48B) erzeugt wird, und daß in der zweite Betriebsmodus der Ausführung umfasst das Verfahren einen Schritt der Aktivierung der Multimedia-Inhalte durch das tragbare Endgerät zum grafischen Objekt zugeordnet wird, wenn der Anschluss innerhalb des Lumens des Beleuchtungspunktes entsprechend das graphischen Objekt bewegt.

2. Verfahren nach dem vorhergehenden Anspruch, einen Schritt des Speicherns durch das tragbare Endgerät (50) umfasst, in einer Zuordnungstabelle, eine Entsprechung zwischen der Beleuchtungs graphisches Objekt (48; 48A, 48B) und dem Element der Identifikationsdaten des Beleuchtungs Punkt (14; 14A, 14B, 14C).

3. Verfahren nach einem der vorhergehenden Ansprüche, wobei die graphische Objektbeleuchtung (48; 48A, 48B) bewegt werden kann und die auf der grafischen Unterstützung neu positioniert werden kann (46).

4. es Verfahren nach dem vorhergehenden Anspruch, das tragbare Endgerät (50) eine Berührungsbildschirmanzeige (52) umfasst, umfasst das Verfahren einen Schritt des Bewegens oder Repositionierung der graphischen Objektbeleuchtung (48; 48A, 48B) um einen vordefinierten Gestenbefehl .

5. Verfahren nach einem der vorhergehenden Ansprüche, wobei der Schritt des Auswählens der Multimedia-Inhalte einen Schritt des Verbindens über ein Kommunikationsnetzwerk (28), das tragbare Endgerät (50) zu einem lokalen Server oder auf einer Plattform einer Remote-Server die Datenbank (42) von Medieninhalt umfasst.

6. Verfahren nach einem der vorhergehenden Ansprüche, wobei der Schritt des Zuweisens einen Schritt des Speicherns durch das tragbare Endgerät (50) umfasst, in einer Zuordnungstabelle, die eine Entsprechung zwischen der Beleuchtungs graphisches Objekt (48; 48A, 48B) und eine Adresse einer Lage der Multimedia-Inhalte umfassen lokale oder entfernt.

7. Verfahren nach einem der vorhergehenden Ansprüche, wobei die graphische Objektbeleuchtung (48; 48A, 48B) manipuliert werden kann.

8. Verfahren nach einem der vorhergehenden Ansprüche, wobei das Verfahren einen Schritt umfasst zum grafischen Objektbeleuchtung des Zuweisens (48; 48A, 48B) von mindestens einer Funktion für mindestens einen der Lichtpunkte (14 steuert; 14A, 14B, 14C) des (12) - Netz in eine Art und Weise, so dass das Beleuchtungs graphische Objekt (48; 48A, 48B) zum Steuern des Beleuchtungspunktes ein Grafikelement bildet (14; 14A, 14B, 14C).

9. Verfahren nach dem vorhergehenden Anspruch, wobei das tragbare Endgerät (50) einen berührungsempfindlichen Anzeigebildschirm (52) und die Beleuchtungsgrafikobjekt (48; 48A, 48B) so manipulierbar, das Verfahren einen Schritt des Manipulierens Beleuchtung der umfasst Grafik-Objekt (48; 48A, 48B), um den Beleuchtungspunkt Steuern (14; 14A, 14B, 14C) mittels eines vordefinierten Gestenbefehl.

10. Verfahren nach dem vorhergehenden Anspruch, wobei das Verfahren einen Schritt des Übertragens umfasst, durch das tragbare Endgerät (50), ein Signal, das den Beleuchtungspunkt für die Steuerung (14; 14A, 14B, 14C) als Funktion der taktilen Informationen übernommen von das tragbare Endgerät (50) von dem vordefinierten Geste Befehl des Schritts der Manipulierung führt.

11. Verfahren nach einem der Ansprüche 8 bis 10, wobei die Funktion den Beleuchtungspunkt für die Steuerung (14; 14A, 14B, 14C) von einem Dimm-Steuerfunktion ausgewählt ist, eine Funktion für die Beleuchtung des Beleuchtungspunktes Steuerung (14; 14A, 14B, 14C), eine Steuerfunktion des Beleuchtungspunkt (14 Absperren; 14A, 14B, 14C) und eine Steuerfunktion zum Modifizieren der Farbtemperatur des Beleuchtungspunktes (14; 14A, 14B, 14C).

12. Verfahren nach einem der vorhergehenden Ansprüche, wobei der physikalische Raum mindestens eine Vorrichtung aus den physikalischen Typs angeschlossen Lichtpunkte unterschiedliche (14; 14A, 14B, 14C), wobei das Verfahren einen Schritt von dem tragbaren des Erfassens Klemme (50) Gerät durch drahtlose Kommunikations-Hardware und ein Schritt des Erzeugens auf der Grafikmedien (46) eines anderen graphischen Objekts mit dem physikalischen Gerät zugeordnet sind angeschlossen konfigurierbaren verbunden werden, wobei "graphisches Objekt der Vorrichtung verbunden".

13. Verfahren nach einem der vorhergehenden Ansprüche, umfassend eine Handlung die grafischen Objekte der Abbildung (48; 48A, 48B), um eine Gruppe von graphischen Objekten zu erstellen (48; 48A, 48B) als Funktion eines vordefinierten Parameter durch einen Benutzer.

14. Tragbares Terminal (50) zur Durchführung des Verfahrens nach einem der vorhergehenden Ansprüchen, die weiterhin einen Anzeigeschirm (52), einen optischen Empfänger (54), das Identifikationsdatums durch einen Lichtstrom von einem Lichtpunkt übertrug das Empfangen (14; 14A, 14B, 14C) des (12) Netzwerkes an ein Datenspeichermodul (64) und einen Prozessor (58), **dadurch gekennzeichnet, dass** das Speichermodul (64) umfasst ein Software-Modul-Software Anweisungen umfasst, die bei Ausführung durch der Prozessor betreibbar ist, um (58) nach der entsprechenden Schritte eines Verfahrens implementiert einem der vorhergehenden Ansprüche.

15. Ein Stütz ladbarer Softwaremodul in ein Daten- und Datenspeichermodul (64) einen tragbaren Endgeräts (50) nach dem vorhergehenden Anspruch, **dadurch gekennzeichnet, dass** die Software-Modul Software-Anweisungen für die Schritte des Verfahrens nach einem der umfasst Ansprüche 1 bis 13, wenn die Software-Anweisungen auf dem tragbaren Endgerät ausgeführt werden (50).

## Claims

1. Scripting method of physical space intended to be illuminated from an array (12) of spots of light (14; 14A, 14B, 14C), wherein each illumination point (14; 14A, 14B, 14C) is configured to transmit an identification data item (44A, 44B) via the light that it emits, the method being intended to be implemented by a portable terminal (50) equipped with a graphical display screen and (52) that can be configured alternately in first and second modes of operation for learning and executing, the method comprising the steps of:
- generation by the portable terminal in (50) a graphical user interface for display on the screen (52) of a graphical (46) support having at least two dimensions defining a virtual physical space,
- receiving by the portable terminal (50) of the element of identification data (44A, 44B) of one of the points of light (14; 14A, 14B, 14C) when the terminal (50) is moved within the light of the illumination point (14; 14A, 14B, 14C),
and in that, in the first learning mode of operation of the portable terminal, the method comprises the steps of:
- generation by the portable terminal (50), on the support platform and (46) to receipt of the item of identification data (44A, 44B), of a configurable virtual graphical object (48; 48A, 48B), associated with the illumination point (14; 14A, 14B, 14C), said "illumination graphical object",
- activation of the virtual graphical object (48 ; 48A, 48B) in a configurable state by moving the terminal (50) under the luminous flux of the lighting point,
- selection from the portable terminal in (50) a multimedia content in a database (42) of multimedia contents and allocation of the selected multimedia content to the graphical object lighting (48; 48A, 48B) generated,and in that, in the second mode of operation of execution, the method comprises a step of activantion of the multimedia content by the portable terminal assigned to the graphical object when the terminal is moved within the lumen of the illumination point corresponding to the graphical object.

2. Method according to the preceding claim, comprising a step of storing by the portable terminal (50), in an association table, a correspondence between the illumination graphical object (48; 48A, 48B) and the element of identification data of the illumination point (14; 14A, 14B, 14C).

3. Method according to either one of the preceding claims, wherein the graphical object lighting (48; 48A, 48B) can be moved and which can be repositioned on the graphical support (46).

4. Method according to the preceding claim, the portable terminal (50) comprising a touch screen display (52), the method comprises a step of moving or repositioning of the graphical object lighting (48; 48A, 48B) by a predefined gesture command.

5. Method according to any one of the preceding claims, wherein the step of selecting the multimedia content includes a step of connecting, via a communication network (28), the portable terminal (50) to a local server or to a platform of a remote server comprising the database (42) of media content.

6. Method according to any one of the preceding claims, wherein the step of assigning comprises a step of storing by the portable terminal (50), in an association table, a correspondence between the illumination graphical object (48; 48A, 48B) and an address of a location of the multimedia content comprising local or remote.

7. Method according to any one of the preceding claims, wherein the graphical object lighting (48; 48A, 48B) can be manipulated.

8. Method according to any one of the preceding claims, wherein the method comprises a step of assigning to the graphical object lighting (48; 48A, 48B) of at least one function for controlling at least one of the points of light (14; 14A, 14B, 14C) of the (12) network in such a way that the illumination graphical object (48; 48A, 48B) forms a graphic element for controlling the illumination point (14; 14A, 14B, 14C).

9. Method according to the preceding claim, wherein the portable terminal (50) comprising a touch sensitive display screen (52) and the lighting graphics object (48; 48A, 48B) being manipulatable, the method comprises a step of manipulating illumination of the graphics object (48; 48A, 48B) for controlling the illumination point (14; 14A, 14B, 14C) by means of a predefined gesture command.

10. Method according to the preceding claim, wherein the method comprises a step of transmitting, by the portable terminal (50), a signal for controlling the illumination point (14; 14A, 14B, 14C) as a function of tactile information acquired by the portable terminal (50) resulting from the predefined gesture command of the step of manipulating.

11. Method according to any one of claims 8 to 10, wherein the function for controlling the illumination point (14; 14A, 14B, 14C) is selected from a dimming control function, a function for controlling lighting of the illumination point (14; 14A, 14B, 14C), a control function of shutting off the illumination point (14; 14A, 14B, 14C) and a control function for modifying the color temperature of the illumination point (14; 14A, 14B, 14C).

12. Method according to any one of the preceding claims, wherein, the physical space comprising at least one apparatus distinct from the physical type connected lighting points (14; 14A, 14B, 14C), the method comprising a step of detecting by the portable terminal (50) apparatus to be connected by wireless communication hardware and a step of generating on the graphics media (46) of another graphical object associated with the physical device configurable connected, said "graphical object of apparatus connected".

13. Method according to any one of the preceding claims, comprising an act of mapping the graphical objects (48; 48A, 48B) in order to create a group of graphic objects (48; 48A, 48B) as a function of a predefined parameter by a user.

14. Portable terminal (50) for implementing the method according to any one of the preceding claims, further comprising a display screen (52), an optical receiver (54) capable of receiving identification data transmitted by a light flux from a light point (14; 14A, 14B, 14C) of the (12) network, to a data storage module (64) and a processor (58), **characterized in that** the storage module comprises (64) a software module comprising software instructions that when executed by the processor is operable to (58) implement the corresponding steps of a method according to any one of the preceding claims.

15. A support software module loadable into a data and data storage module (64) of a portable terminal (50) according to the preceding claim, **characterized in that** the software module includes software instructions for performing steps of the method according to any one of claims 1 to 13, when the software instructions are executed on said portable terminal (50).
